# EUROPEAN PATENT SPECIFICATION

(11) **EP 3 339 151 B1**
(45) Date of publication and mention of the grant of the patent: **13.12.2023**
(21) Application number: 16850388.6
(22) Date of filing: 30.09.2016
(51) Int. Cl.: B62K 3/00, B62K 21/00, B62K 11/00

(54) **HUMAN-MACHINE INTERACTION BODY-SENSING VEHICLE**
FAHRZEUG MIT MENSCH-MASCHINE-INTERAKTION ZUR KÖRPERERFASSUNG
VÉHICULE À DÉTECTION DE CORPS AVEC INTERACTION HOMME-MACHINE

(30) Priority: 01.10.2015 CN 201510666424
(43) Date of publication of application: 27.06.2018
(73) Proprietor: Hangzhou Chic Intelligent Technology Co., Ltd, Hangzhou, Zhejiang 310000 (CN)
(72) Inventor: YING, Jiawei, Hangzhou Zhejiang 310000 (CN)
(74) Representative: Sun, Yiming
(86) International application number: PCT/CN2016/100984
(87) International publication number: WO 2017/054764

(56) References cited:
- EP-A1- 2 913 258
- CN-A- 103 600 799
- CN-A- 104 118 507
- CN-A- 104 943 780
- CN-A- 105 644 672
- CN-U- 204 236 672
- FR-A1- 2 895 359
- JP-B2- 3 981 733
- JP-B2- 3 981 733
- US-A1- 2006 260 862
- US-A1- 2006 260 862
- US-A1- 2010 023 248
- US-A1- 2012 166 048

## Description

### FIELD OF THE DISCLOSURE

The present disclosure relates to human-machine interaction balancing vehicles, and more particularly, to a human-machine interaction body-sensing vehicle.

### BACKGROUND OF THE DISCLOSURE

Human-machine interaction body-sensing vehicles, also called electric balancing vehicles or sensor controlled vehicles, generally work based on a basic principle of "dynamic stabilization". In a vehicle body of a human-machine interaction body-sensing vehicle, a gyroscope may cooperate with an accelerometer to detect change of the vehicle body's attitude, and a servo control system can precisely control the vehicle body to adjust its posture, thereby balancing the vehicle.

The human-machine interaction body-sensing vehicles generally have two categories: with a handle bar, and without a handle bar. In particular, a human-machine interaction body-sensing vehicle with a handle bar can be manipulated to move forward, move backward, and take turns by controlling the handle bar. A human-machine interaction body-sensing vehicle without a handle bar can move forward and backward by tilting the vehicle body, and can take turns by rotating two pedals by user's feet. An example of a human-machine interaction body-sensing vehicle without a handle bar can be a two-wheel balancing vehicle disclosed by Chinese Patent Application No. CN201320300947. The two-wheel balancing vehicle includes an internal cover, and the internal cover is composed of a left internal cover and a right internal cover symmetric with each other. The left internal cover is rotatably connected to the right internal cover.

US 2010/023248 A1 discloses a parallel two-wheeled vehicle in which a rider can ride in safety without executing a predetermined procedure in boarding. A parallel two-wheeled vehicle control apparatus according to the present invention includes a drive unit that drives two wheels arranged on the same axis line in parallel, a rider detection unit that detects a state of a rider on a riding part that is connected to the wheels, a vehicle detection unit that detects a posture of a vehicle body, and a control unit that generates a control command to the drive unit and performs initial control to optimize transition of control from boarding to normal operation based on the detection result by the vehicle detection unit upon detection by the rider detection unit that the rider rides on the riding part while satisfying a certain riding condition.

The document CN 105644672 A discloses a vehicle according to the preamble of claim 1.

However, the internal cover of the two-wheel balancing vehicle used as frame supporting is composed of the left internal cover and a right internal cover. It is too complicate.

### SUMMARY OF THE DISCLOSURE

To solve the above-mentioned problem, a human-machine interaction body-sensing vehicle of simple structure is provided. The present invention is defined in the appended claims.

The above human-machine interaction body-sensing vehicles may have the following advantages.

The human-machine interaction body-sensing vehicle includes a support frame of integrated structure that plays a role of supporting. The pedal is arranged on the support frame independently. Compared to a balance vehicle in the prior art, the human-machine interaction body-sensing vehicle has a simple structure, omitting two rotatably connected structure configured to install two pedals separately.

### BRIEF DESCRIPTION OF THE DRAWINGS

References are made to the accompanying drawing(s) to better illustrate the present invention.
FIG. 1 is an exploded diagram of a human-machine interaction body-sensing vehicle according to the first embodiment of the disclosure.
FIG. 2 is a perspective view of the human-machine interaction body-sensing vehicle according to the first embodiment of the disclosure.
FIG. 3 is an exploded diagram of the human-machine interaction body-sensing vehicle of FIG. 2.
FIG. 4 is a partly exploded diagram of the human-machine interaction body-sensing vehicle of FIG. 2.
FIG. 5 is a partly exploded diagram of the human-machine interaction body-sensing vehicle of FIG. 4.

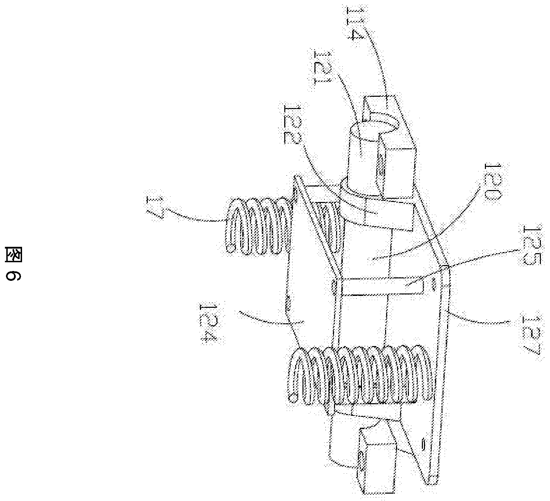

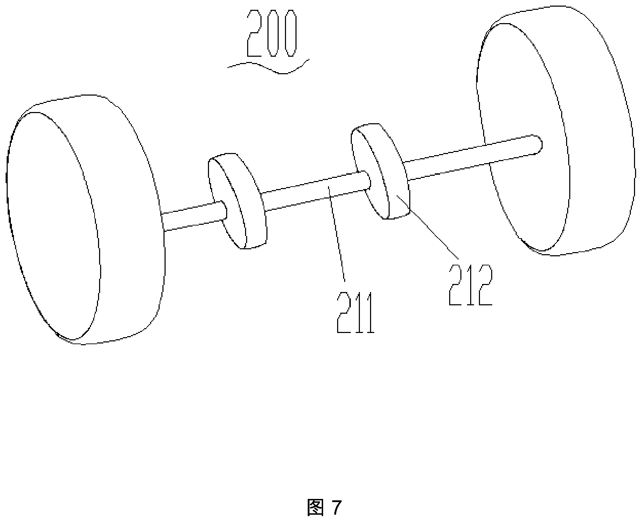

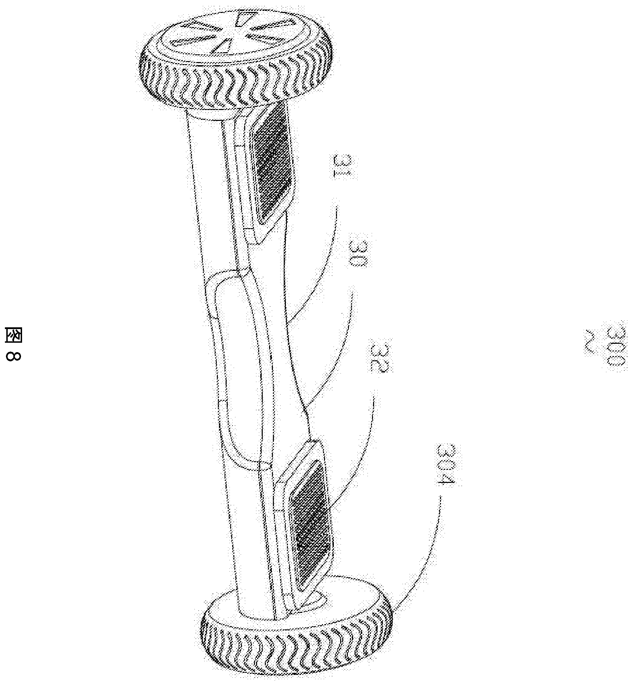

FIG. 6 is a perspective view of the pedal and the plurality of flexible supports of the human-machine interaction body-sensing vehicle of FIG. 4.

### DETAILED DESCRIPTION OF THE DISCLOSURE

The following description will render a clear and complete description of the present disclosure in combination with the embodiments and accompanying drawings.

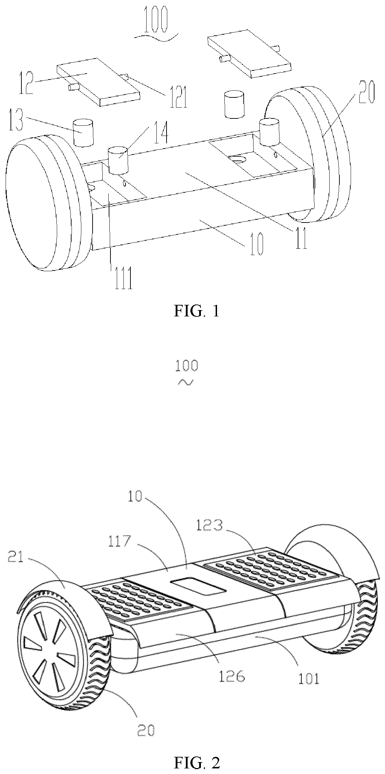

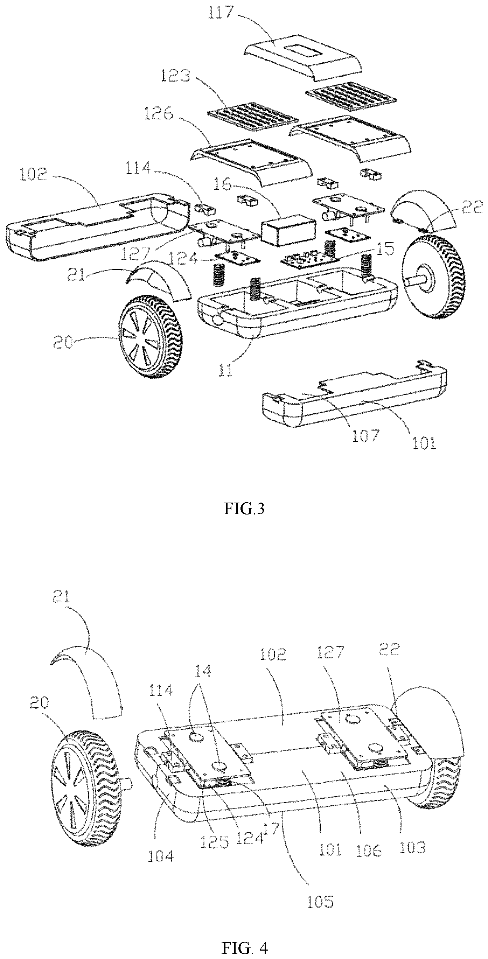

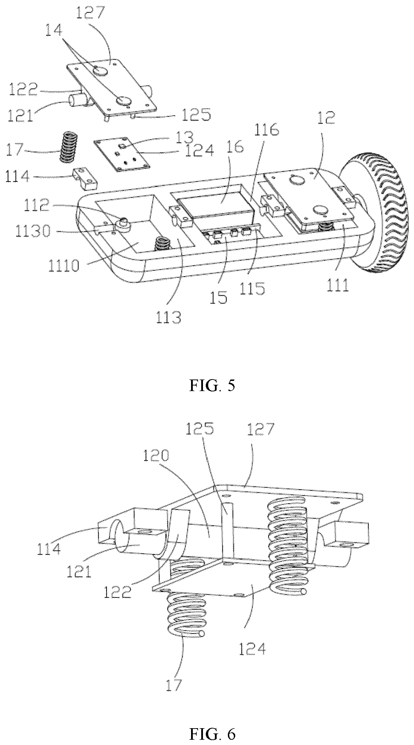

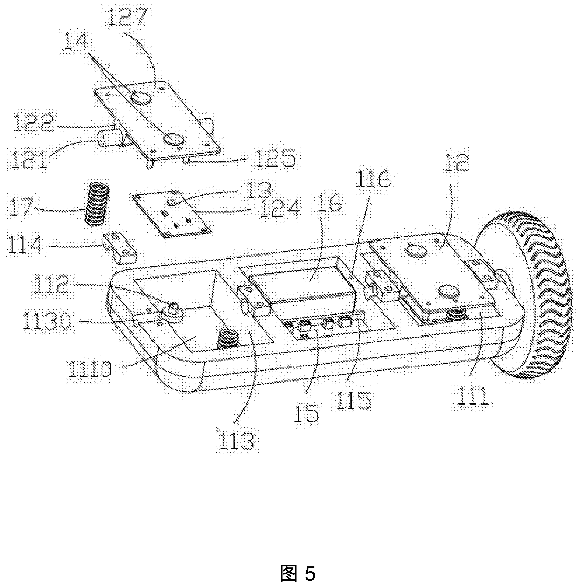

Referring to FIGS. 1 to 5, a human-machine interaction body-sensing vehicle 100 of the first embodiment is provided. The human-machine interaction body-sensing vehicle 100 includes a vehicle body 10 and two wheels 20 coupled with the vehicle body 10.

Preferably, planes of the two wheels 20 may be parallel with each other, and axles of the two wheels 20 is aligned in substantially the same imaginary straight line. The two wheels 20 may be assembled to opposite sides of the vehicle body 10 through the respective axles. For example, the two wheels 20 may be assembled to opposite ends of the vehicle body 10, respectively, or assembled at two sides under the vehicle body 10. In this embodiment, the two wheels 20 may be rotatably coupled with opposite ends of the vehicle body 10. The two wheels 20 can rotate on an axis of the vehicle body 10, which may substantially coincide with the above imaginary straight line, thereby enabling movement of the human-machine interaction body-sensing vehicle 100.

The vehicle body 10 may include a support frame 11, two pedals 12 disposed on the support frame 11, a plurality of first position sensors 13, and a controller 15. The support frame 11 is formed into an integrated structure and be rotatably coupled with the two wheels 20. The words "integrated structure" means that the constituent parts of the support frame 11 cannot be moved with respect to each other so that the support frame is substantially an integral piece, which is different from the prior art that in a conventional human-machine interaction body-sensing vehicle a left internal cover can rotate relative to the right internal cover. The support frame 11 can be formed into an integrated structure by molding, welding, or riveting. In this embodiment, the support frame 11 is a rigid plate-type structure. Two symmetrical pedal areas 111 are defined on a side of the support frame 11 away from the ground. The two pedals 12 are respectively disposed in the two pedal areas 111. At least one of the plurality of first position sensors 13 is arranged in the pedal areas 111. The pedal areas 111 may be receiving grooves 1110 recessed towards an inside of the support frame 11. A protrusion 121 facing towards the wheels 20 is provided at each side of the pedal 12, and the pedal 12 is pivoted to the vehicle body 10 via the protrusion 121, thereby the two pedals 12 is rotatably connected to the support frame 11. The pedal areas 111 may be a plane, not a groove, and the pedals 12 may be arranged on the support frame 11.

The pedal 12 may be independently mounted on the support frame 11. The words "independently mounted" means that the pedal 12 is not fixedly disposed on the support frame 11, but to a certain extent loosely assembled to the support frame 11 through intermediate connections such that the pedal 12 can move relative to the support frame 11. For example, the pedal 12 can be rotatably connected to the support frame 11 along an axle of the wheel 20 or an axis of the wheel 20. In this embodiment, the pedal 12 is rotatably connected to the support frame 11 along the axle of the wheel 20. When a user stands on the pedal 12, the pedal 12 can rotate and have a tilt angle relative to the support frame 11. The pedal 12 can be of any shape, such as a plate-type structure. In this embodiment, the pedal 12 is a plate-type structure. The pedal 12 includes a plate-type footboard 127, a fixing element 122 assembled to or integrated into downside of the pedal 12, and a mounting shaft 120 assembled to or integrated into the fixing element 122. The protrusion 121 facing towards the wheels 20 is provided at the mounting shaft 120 and covers part of the pedal 12. So the mounting shaft 120 makes the pedal 12 stronger. The protrusion 121 can be formed at the fixing element 122 or the footboard 127, or assembled on fixing element 122 or the footboard 127.

The first position sensor 13 is configured to detect rotation information or tilt information of a user standing on the pedal 12, and send the rotation information or the tilt information to the controller 15. The controller 15 thus controls the wheels 20 to rotate according to the tilt information, so that the user can manipulate the human-machine interaction body-sensing vehicle 100 to move. Not only the wheels 20 can rotate via just the first position sensor 13, but also the wheels 20 can move forward and backward if the tilt information or rotation information of the two pedals 12 have minor difference, or take turns, like turn right or turn left, if the tilt information or rotation information of the two pedals 12 have large difference. The attitude information may include posture information of the user standing on the pedal 12. The first position sensor 13 can be of any sensing-type. For example, the first position sensor 13 can be gyroscope, a pressure sensor, or a photoelectric sensor. When the first position sensor 13 is a photoelectric sensor, the pedal 12 can rotatably connected to the support frame 11 or fixed on the support frame 11. The number of the first position sensor 13 can be any, for example, the number of the first position sensor 13 can be single or multiple. In this embodiment, the number of the first position sensor 13 is single. The position of the first position sensor 13 is not limited. For example, the first position sensor 13 is located on a inductive switch 14, or integrated into the inductive switch 14. A second position sensor can be provided on the vehicle body 10 and configured to detect tilt information of the support frame 11 relative to the wheels 20, in order to detect the tilt information of the support frame 11 relative to the ground. The human-machine interaction body-sensing vehicle 100 can be move forward or backward according to the tilt information detected by the second position sensor. The human-machine interaction body-sensing vehicle 100 can be move forward or backward according to tilt of the vehicle body 10, that is, same angular speeds of the two wheels 20 drove by an actuation device. The actuation device can drive the wheels 20 to take turns according to the tilt information detected by the first position sensor 13. In this embodiment, the human-machine interaction body-sensing vehicle 100 takes turns according to tilt angle of the pedal 12, that is, different angular speeds of the two wheels 20 drove by the actuation device. In this embodiment, the first position sensor 13 and/or the second position sensor is integrated into a subsidiary circuit board 124. The subsidiary circuit board 124 is fixed to the pedal 12. The first position sensor 13 on the subsidiary circuit board 124 can sway with the footboard 127, in order to sensing the movement of the footboard 127. A plurality of mounting pillar 125 is extended from the footboard 127 and configured to fix the subsidiary circuit board 124. Also the first position sensor 13 can be connected to the footboard 127 by any means, in order to sway with the footboard 127.

In this embodiment, the inductive switches 14 are located in the pedal areas 111 of the vehicle body 10 of the human-machine interaction body-sensing vehicle 100, and configured to sense the pedal 12 pressed or not in order to control the wheels 20 to rotate or stop. In detail, when the inductive switches 14 are pressed by the two pedals 12 individually, and the strength of the pressure to the inductive switches 14 is the same, the human-machine interaction body-sensing vehicle 100 will start to move, in order to prevent the human-machine interaction body-sensing vehicle 100 starting to move and unexpected injury when just one pedal 12 is pressed by the user. In this embodiment, the inductive switches 14 are arranged on the footboard 127. In other embodiments, the inductive switches 14 can be arranged under the footboard 127, and sense dropping of the footboard 127 to control the wheels 20 rotate or stop. Also a groove can be located on the footboard 127 to accommodate the inductive switches 14.

In this embodiment, the vehicle body 10 further includes a plurality of flexible supports 17. The plurality of flexible supports 17 are arranged between the pedal 12 and a bottom of the receiving groove 1110 and form a buffer to pressing of the pedal 12 relative to the first position sensor 13 and the inductive switches 14 and make the pedal 12 return. The plurality of flexible supports are springs. The springs can be fixed on a fixing protrusion 112 of the receiving groove 1110, or the pedal 12.. In other embodiment, the plurality of flexible supports can be torsion springs (not shown).

In another embodiment, the plurality of flexible supports 17 can be pressure structure. In detail, a pressure sensor is arranged between springs or in the footboard 127. For example, the pedal 12 tilt, the pressure sensor can detect pressure information, gravity information, or position information. The controller 15 can control the vehicle body 10 move or rotate according to the pressure information, gravity information, or position information. The pedal 12 is rotatably connected to the support frame 11.

In another embodiment, the plurality of flexible supports 17 can be capacitor installations or inductance devices. That is, the volume of the vehicle 10 can be decreased without the rotate of the pedal 12. When the user stands on the pedal 12, the capacitor installations or inductance devices can detect a pressure and control the wheels 20 to rotate. The wheels 20 can move forward or backward, take turns, accelerate, or slow down according to the different pressures of different positions detected by the capacitor installations or inductance devices. The pedals 12 can be installed with a combination of pressure sensor and capacitor installations or inductance devices. The number of capacitor installations or inductance devices installed on the pedal 12 can be arbitrary. The pedals 12 can be installed with one capacitor installations or one inductance devices. The pedals can be installed with two capacitor installations or two inductance devices. The pedals can be installed with a plurality of capacitor installations or a plurality of inductance devices.

Alternatively, the vehicle body 10 may further include a power source 16 and an actuation device (not shown). The power source 16 can supply electrical energy to the actuation device, the first position sensor 13, and the controller 15. The controller 15 can control the power source 16, the actuation device, and the first position sensor 13, and send an actuation signal to the actuation device based on the tilt information detected by the first position sensor 13, thereby driving the wheels 20 to rotate. Typically, the vehicle body 10 may include two actuation devices respectively assembled in the two wheels 20 to control the corresponding wheels 20. In other embodiment, the actuation devices can be installed in the support frame 11, to minimize the volume of the wheels 20.

In this embodiment, the support frame 11 has a shape of boat and includes two receiving grooves 1110 and a receiving area 116 located between the two receiving grooves 1110 and used for accommodating the power source 16 and the controller 15. The controller 15 can be a main circuit board. A clipboard 115 is arranged between the power source 16 and the controller 15 and configured to separate and prevent effecting each other.

A cover 117 is arranged over the receiving area 116 and used for protecting the power source 16 and the controller 15.

A support structure 113 is arranged between the receiving area 116 and the receiving groove 1110 structure and configured to support and pivoted to the protrusion 121 of the pedal 12. The support structure 113 is integrated into the support frame 11, or assembled to the support frame 11. A pivoted recess 1130 is located on the support structure 113 and the support frame 11 and configured to pivot to the protrusion 121. And a fixing structure 114 is located above the pivoted recess 1130 and configured to fix the protrusion 121. The fixing structure 114 is integrated into the support frame 11, or assembled to the support frame 11.

The vehicle body further includes an extractable shell arranged on the support frame 11 and able to be extracted along a direction perpendicular to an axle of the wheels 10. The extractable shell can be extracted along a direction of the human-machine interaction body-sensing vehicle 100 moving forward or backward. The extractable shell includes a first shell 101 and a second shell 102. The first shell 101 is able to be extracted along a direction from forward to backward and sheathed in the support frame 11. The second shell 102 are able to be extracted along from backward to forward and sheathed in the support frame 11. In detail, the extractable shell includes two end portions 104 facing to the wheels 20, a side portion 103 using for connecting the two end portions 104, a top portion 106 away from the ground, and a bottom portion 105 facing to the top portion 106. A groove 107 is arranged on the top portion 106 and configured to accommodate the pedal 12. In this embodiment, the second shell 102 is symmetrical with the first shell 101. Alternatively, the second shell 102 can be unsymmetrical with the first shell 101, the first shell 101 and the second shell 102 are assembled along upward or downward, an arbitrary angle with the axis of the wheels, or the axle of the wheels.

A pedal cover 126 is located on the pedal 12. The pedal cover 126 is fixed on the pedal 12. A non-slip mat 123 is arranged on the pedal cover 126 and used for the user's standing. Alternatively, the pedal cover 126 can be fixed on the support frame 11 or the extractable shell. Middle of the pedal cover 126 can be hollow or be flexible structure, so the pedal 12 can be move upward or downward or tilt when the non-slip mat 123 is pressed by the user.

A wheel shell 21 is arranged over the wheel 20. A fixing portion 22 is extended from side of the wheel shell 21. The fixing portion 22 is assembled to the support frame 11 or the extractable shell. Alternatively, the wheel shell 21 can be integrated into the support frame 11 or the extractable shell.

## Claims

1. A human-machine interaction body-sensing vehicle (100, 200, 300) comprising a vehicle body (10, 30) and two wheels (20, 304) coupled with the vehicle body (10, 30), wherein each of the wheels is rotated with the vehicle body (10, 30) along an axle of the wheel (20, 304), the vehicle body (10, 30) comprises a support frame (11, 211, 31), two pedals (12, 212, 32), a first position sensor (13), and a controller (15), wherein the support frame (11, 211, 31) is an integrated rigid plate-type structure and rotatably connected to the wheels (20, 304), and the first position sensor (13) is configured to detect position information, gravity information, or pressure information of a user standing on the pedal (12, 212, 32), wherein the two pedals (12, 212, 32) are located on and rotatably connected to the support frame (11, 211, 31), **characterized in that**
the first position sensor (13) is a pressure sensor.

2. The human-machine interaction body-sensing vehicle (100, 200, 300) of claim 1, **characterized in that** the vehicle body (10, 30) makes turns when the detect position information, gravity information, or pressure information of one of the two pedals (12, 212, 32) is unequal to that of the other of the two pedals.

3. The human-machine interaction body-sensing vehicle (100, 200, 300) of claim 1, **characterized in that** the vehicle body (10, 30) moves forward or backward when the vehicle body (10, 30) tilts forward or backward.

4. The human-machine interaction body-sensing vehicle (100, 200, 300) of claim 1, **characterized in that** the first position sensor (13) is configured to detect pressure information of a user standing on the pedal (12, 212, 32), and the controller (15) is configured to drive the wheels (20, 304) to rotate based on the detected pressure information and take turns based on speed difference of the two wheels (20, 304).

5. The human-machine interaction body-sensing vehicle (100, 200, 300) of claim 1, **characterized in that** the first position sensor (13) is configured to detect minor change of tilt angle of the pedal.

6. The human-machine interaction body-sensing vehicle (100, 200, 300) of claim 1, **characterized in that** the first position sensor (13) is configured to detect deformation information of the pedal (12, 212, 32) relative to the support frame (11, 211, 31).

7. The human-machine interaction body-sensing vehicle (100, 200, 300) of claim 1, **characterized in that** two symmetrical pedal areas (11, 211, 311) are defined on a side of the support frame (11, 211, 31) away from the ground, and the two pedals (12, 212, 32) are respectively disposed in the two pedal areas (11, 211, 31).

8. The human-machine interaction body-sensing vehicle (100, 200, 300) of claim 1, **characterized in that** the first position sensor (13) is configured to detect whether the pedal (12, 212, 32) is pressed or not in order to control the wheels (20, 304) to rotate or stop.

9. The human-machine interaction body-sensing vehicle (100, 200, 300) of claim 1, **characterized in that** the human-machine interaction body-sensing vehicle (100, 200, 300) further comprises a power source (16) and an actuation device, the power source (16) is configured to supply electrical energy to the actuation device, the first position sensor (13), and the controller (15), and the controller (15) is configured to control the power source (16), the actuation device, and the first position sensor (13), and to send an actuation signal to the actuation device based on pressure information detected by the first position sensor (13), to drive the wheels (20, 304) to rotate.

10. The human-machine interaction body-sensing vehicle (100, 200, 300) of claim 1, **characterized in that** the pedal (12, 212, 32) comprises a footboard (12, 212, 327) and a mat (12, 212, 323) located on the footboard (12, 212, 327), and the first position sensor (13) is arranged under the footboard (12, 212, 327).

11. The human-machine interaction body-sensing vehicle (100, 200, 300) of claim 1, **characterized in that** the human-machine interaction body-sensing vehicle (100, 200, 300) further comprises a second position sensor, and the second position sensor is configured to detect tilt information of the support frame (11, 211, 31) relative to the wheels (20, 304).

12. The human-machine interaction body-sensing vehicle (100, 200, 300) of claim 1, **characterized in that** the support frame (11, 211, 31) is sheathed in the pedal (12, 212, 32).

13. The human-machine interaction body-sensing vehicle (100, 200, 300) of claim 12, **characterized in that** the first position sensor (13) is arranged between the pedal (12, 212, 32) and the support frame (11, 211, 31), and is configured to detect pressure information of the pedal (12, 212, 32).

## Patentansprüche

1. Fahrzeug (100, 200, 300) mit Mensch-Maschine-Interaktion zur Körpererfassung, das einen Fahrzeugkörper (10, 30) und zwei Räder (20, 304), die mit dem Fahrzeugkörper (10, 30) gekoppelt sind, umfasst, wobei jedes der Räder mit dem Fahrzeugkörper (10, 30) entlang einer Achse des Rads (20, 304) gedreht wird, der Fahrzeugkörper (10, 30) einen Stützrahmen (11, 211, 31), zwei Pedale (12, 212, 32), einen ersten Positionssensor (13) und eine Steuereinheit (15) umfasst, wobei der Stützrahmen (11, 211, 31) eine integrierte starre Plattenstruktur ist und drehbar mit den Rädern (20, 304) verbunden ist und der erste Positionssensor (13) konfiguriert ist, Positionsinformationen, Schwerkraftinformationen oder Druckinformationen eines Benutzers zu erfassen, der auf dem Pedal (12, 212, 32) steht, wobei die zwei Pedale (12, 212, 32) sich auf dem Stützrahmen (11, 211, 31) befinden und drehbar damit verbunden sind, **dadurch gekennzeichnet, dass**
der erste Positionssensor (13) ein Drucksensor ist.

2. Fahrzeug (100, 200, 300) mit Mensch-Maschine-Interaktion zur Körpererfassung nach Anspruch 1, **dadurch gekennzeichnet, dass** der Fahrzeugkörper (10, 30) Kurven macht, wenn die erfassten Positionsinformationen, Schwerkraftinformationen oder Druckinformationen eines der zwei Pedale (12, 212, 32) ungleich jenen des anderen der zwei Pedale sind.

3. Fahrzeug (100, 200, 300) mit Mensch-Maschine-Interaktion zur Körpererfassung nach Anspruch 1, **dadurch gekennzeichnet, dass** der Fahrzeugkörper (10, 30) sich vorwärts oder rückwärts bewegt, wenn der Fahrzeugkörper (10, 30) sich nach vorne oder nach hinten neigt.

4. Fahrzeug (100, 200, 300) mit Mensch-Maschine-Interaktion zur Körpererfassung nach Anspruch 1, **dadurch gekennzeichnet, dass** der erste Positionssensor (13) konfiguriert ist, Druckinformationen eines Benutzers zu erfassen, der auf dem Pedal (12, 212, 32) steht, und die Steuereinheit (15) konfiguriert ist, die Räder (20, 304) auf der Grundlage der erfassten Druckinformationen anzutreiben, sich zu drehen, und auf der Grundlage einer Geschwindigkeitsdifferenz der zwei Räder (20, 304) Kurven zu machen.

5. Fahrzeug (100, 200, 300) mit Mensch-Maschine-Interaktion zur Körpererfassung nach Anspruch 1, **dadurch gekennzeichnet, dass** der erste Positionssensor (13) konfiguriert ist, geringfügige Änderungen eines Neigungswinkels des Pedals zu erfassen.

6. Fahrzeug (100, 200, 300) mit Mensch-Maschine-Interaktion zur Körpererfassung nach Anspruch 1, **dadurch gekennzeichnet, dass** der erste Positionssensor (13) konfiguriert ist, Verformungsinformationen des Pedals (12, 212, 32) relativ zu dem Stützrahmen (11, 211, 31) zu erfassen.

7. Fahrzeug (100, 200, 300) mit Mensch-Maschine-Interaktion zur Körpererfassung nach Anspruch 1, **dadurch gekennzeichnet, dass** zwei symmetrische Pedalbereiche (11, 211, 311) auf einer Seite des Stützrahmens (11, 211, 31) fern vom Boden definiert sind, und die zwei Pedale (12, 212, 32) jeweils in den zwei Pedalbereichen (11, 211, 31) angeordnet sind.

8. Fahrzeug (100, 200, 300) mit Mensch-Maschine-Interaktion zur Körpererfassung nach Anspruch 1, **dadurch gekennzeichnet, dass** der erste Positionssensor (13) konfiguriert ist, zu erfassen, ob das Pedal (12, 212, 32) gedrückt wird oder nicht, um die Räder (20, 304) zu steuern, sich zu drehen oder zu stoppen.

9. Fahrzeug (100, 200, 300) mit Mensch-Maschine-Interaktion zur Körpererfassung nach Anspruch 1, **dadurch gekennzeichnet, dass** das Fahrzeug (100, 200, 300) mit Mensch-Maschine-Interaktion zur Körpererfassung weiter eine Stromquelle (16) und eine Betätigungsvorrichtung umfasst, die Stromquelle (16) konfiguriert ist, elektrische Energie an die Betätigungsvorrichtung, den ersten Positionssensor (13) und die Steuereinheit (15) bereitzustellen, und die Steuereinheit (15) konfiguriert ist, die Stromquelle (16), die Betätigungsvorrichtung und den ersten Positionssensor (13) zu steuern und ein Betätigungssignal auf der Grundlage von Druckinformationen, die von dem ersten Positionssensor (13) erfasst werden, an die Betätigungsvorrichtung zu senden, um die Räder (20, 304) anzutreiben, sich zu drehen.

10. Fahrzeug (100, 200, 300) mit Mensch-Maschine-Interaktion zur Körpererfassung nach Anspruch 1, **dadurch gekennzeichnet, dass** das Pedal (12, 212, 32) eine Fußplatte (12, 212, 327) und eine Matte (12, 212, 323), die sich auf der Fußplatte (12, 212, 327) befindet, umfasst und der erste Positionssensor (13) unter der Fußplatte (12, 212, 327) angeordnet ist.

11. Fahrzeug (100, 200, 300) mit Mensch-Maschine-Interaktion zur Körpererfassung nach Anspruch 1, **dadurch gekennzeichnet, dass** das Fahrzeug (100, 200, 300) mit Mensch-Maschine-Interaktion zur Körpererfassung weiter einen zweiten Positionssensor umfasst und der zweite Positionssensor konfiguriert ist, Neigungsinformationen des Stützrahmens (11, 211, 31) relativ zu den Rädern (20, 304) zu erfassen.

12. Fahrzeug (100, 200, 300) mit Mensch-Maschine-Interaktion zur Körpererfassung nach Anspruch 1, **dadurch gekennzeichnet, dass** der Stützrahmen (11, 211, 31) in das Pedal (12, 212, 32) gesteckt ist.

13. Fahrzeug (100, 200, 300) mit Mensch-Maschine-Interaktion zur Körpererfassung nach Anspruch 12, **dadurch gekennzeichnet, dass** der Positionssensor (13) zwischen dem Pedal (12, 212, 32) und dem Stützrahmen (11, 211, 31) angeordnet ist und konfiguriert ist, Druckinformationen des Pedals (12, 212, 32) zu erfassen.

## Revendications

1. Véhicule à détection de carrosserie à interaction humain-machine (100, 200, 300) comprenant une carrosserie de véhicule (10, 30) et deux roues (20, 304) couplées à la carrosserie de véhicule (10, 30), chacune des roues tournant avec la carrosserie de véhicule (10, 30) le long d'un essieu de la roue (20, 304), la carrosserie de véhicule (10, 30) comprenant un châssis support (11, 211, 31), deux pédales (12, 212, 32), un premier détecteur de position (13), et une commande (15), le châssis support (11, 211, 31) étant une structure de type plaque rigide intégrée et connectée de manière à pouvoir tourner aux roues (20, 304), et le premier détecteur de position (13) étant configuré pour détecter des informations de position, des informations de gravité, ou des informations de pression d'un utilisateur debout sur la pédale (12, 212, 32), les deux pédales (12, 212, 32) se trouvant sur et étant connectées de manière à pouvoir tourner au châssis support (11, 211, 31), **caractérisé en ce que**
le premier détecteur de position (13) et un capteur de pression.

2. Véhicule à détection de carrosserie à interaction humain-machine (100, 200, 300) selon la revendication 1, **caractérisé en ce que** la carrosserie de véhicule (10, 30) tourne lorsque les informations de position de détection, les informations de gravité, ou les informations de pression de l'une des deux pédales (12, 212, 32) sont inégales à celles de l'autre des deux pédales.

3. Véhicule à détection de carrosserie à interaction humain-machine (100, 200, 300) selon la revendication 1, **caractérisé en ce que** la carrosserie de véhicule (10, 30) se déplace vers l'avant ou vers l'arrière lorsque la carrosserie de véhicule (10, 30) bascule vers l'avant ou vers l'arrière.

4. Véhicule à détection de carrosserie à interaction humain-machine (100, 200, 300) selon la revendication 1, **caractérisé en ce que** le premier détecteur de position (13) est configuré pour détecter des informations de pression d'un utilisateur debout sur la pédale (12, 212, 32) et que la commande (15) est configurée pour entraîner les roues (20, 304) en rotation en se basant sur les informations de pression détectées et pour tourner en se basant sur la différence de vitesse des deux roues (20, 304).

5. Véhicule à détection de carrosserie à interaction humain-machine (100, 200, 300) selon la revendication 1, **caractérisé en ce que** le premier détecteur de position (13) est configuré pour détecter un changement mineur d'un angle de basculement de la pédale.

6. Véhicule à détection de carrosserie à interaction humain-machine (100, 200, 300) selon la revendication 1, **caractérisé en ce que** le premier détecteur de position (13) est configuré pour détecter des informations de déformation de la pédale (12, 212, 32) par rapport au châssis support (11, 211, 31).

7. Véhicule à détection de carrosserie à interaction humain-machine (100, 200, 300) selon la revendication 1, **caractérisé en ce que** deux zones de pédales symétriques (11, 211, 311) sont définies sur une face du châssis support (11, 211, 31) détournée du sol, et que les deux pédales (12, 212, 32) sont respectivement disposées dans les deux zones de pédales (11, 211, 311).

8. Véhicule à détection de carrosserie à interaction humain-machine (100, 200, 300) selon la revendication 1, **caractérisé en ce que** le premier détecteur de position (13) est configuré pour détecter si la pédale (12, 212, 32) est comprimée ou non afin de commander aux roues (20, 304) de tourner ou de stopper.

9. Véhicule à détection de carrosserie à interaction humain-machine (100, 200, 300) selon la revendication 1, **caractérisé en ce que** le véhicule à détection de carrosserie à interaction humain-machine (100, 200, 300) comprend en outre une source de courant (16) et un dispositif d'actionnement, la source de courant (16) étant configurée pour fournir de l'énergie électrique au dispositif d'actionnement, au premier détecteur de position (13) et à la commande (15), et que la commande (15) est configurée pour commander la source de courant (16), le dispositif d'actionnement, et le premier détecteur de position (13) et pour envoyer un signal d'actionnement au dispositif d'actionnement en se basant sur des informations de pression détectées par le premier détecteur de position (13) afin d'entraîner les roues (20, 304) en rotation.

10. Véhicule à détection de carrosserie à interaction humain-machine (100, 200, 300) selon la revendication 1, **caractérisé en ce que** la pédale (12, 212, 32) comprend un marchepied (12, 212, 327) et un tapis (12, 212, 323) placé sur le marchepied (12, 212, 327) et que le premier détecteur de position (13) est disposé sous le marchepied (12, 212, 327).

11. Véhicule à détection de carrosserie à interaction humain-machine (100, 200, 300) selon la revendication 1, **caractérisé en ce que** le véhicule à détection de carrosserie à interaction humain-machine (100, 200, 300) comprend en outre un second détecteur de position, que le second détecteur de position est configuré pour détecter des informations de basculement du châssis support (11, 211, 31) par rapport aux roues (20, 304).

12. Véhicule à détection de carrosserie à interaction humain-machine (100, 200, 300) selon la revendication 1, **caractérisé en ce que** le châssis support (11, 211, 31) est fourré dans la pédale (12, 212, 32).

13. Véhicule à détection de carrosserie à interaction humain-machine (100, 200, 300) selon la revendication 12, **caractérisé en ce que** le premier détecteur de position (13) est disposé entre la pédale (12, 212, 32) et le châssis support (11, 211, 31) et est configuré pour détecter des informations de pression de la pédale (12, 212, 32).
